# EUROPEAN PATENT SPECIFICATION

(11) **EP 2 560 498 B1**
(45) Date of publication and mention of the grant of the patent: **11.06.2014**
(21) Application number: 11712220.0
(22) Date of filing: 28.03.2011
(51) Int. Cl.: A23C 11/10, A23L 1/0534, A23L 1/305, A23L 1/308, A23L 2/52, A23L 2/66

(54) **BEVERAGE COMPRISING SOY PROTEIN AND CITRUS FIBERS**
GETRÄNK MIT SOJAPROTEINEN UND ZITRUSBALLASTSTOFFEN
BOISSON COMPRENANT DE LA PROTÉINE DE SOJA ET DES FIBRES D'AGRUME

(30) Priority: 22.04.2010 EP 10160652
(43) Date of publication of application: 27.02.2013
(73) Proprietor: Unilever N.V., 3013 AL Rotterdam (NL); Unilever PLC, London, Greater London EC4P 0DY (GB)
(72) Inventor: BECKMANN, Christoph Hendrik, NL-3133 AT Vlaardingen (NL); MELLEMA, Michel, NL-3133 AT Vlaardingen (NL); STRÖM, Anna Helena Edvardsdotter, NL-3133 AT Vlaardingen (NL)
(74) Representative: Askew, Sarah Elizabeth
(86) International application number: PCT/EP2011/054716
(87) International publication number: WO 2011/131457

(56) References cited:
- WO-A1-2007/003391
- WO-A1-2009/065725
- US-A1- 2003 059 514

## Description

### Field of the Invention

The present invention relates to the field of non-fermented soy-based beverages.

### Background of the invention

Consumers have become more knowledgeable about protein and its role in a healthy diet. This new understanding has had a profound effect, stimulating consumer interest and demand for healthier beverages that are fortified with protein. Because beverages are a convenient way to incorporate protein into the diet, manufacturers continue to formulate new products in an effort to make protein more accessible to a wider group of consumers.

The two most popular beverage proteins are whey and soy, and their various isolate derivatives. According to the U.S. Food and Drug Administration, the consumption of food products rich in soy protein can reduce cholesterol, enhance athletic performance, and even aid in the battle against diabetes. In addition, interest for milk replacement by soy protein has increased in view of, on the one hand, issues in relation to over-sensitivity and/or intolerance towards milk constituents experienced by growing numbers of consumers and, on the other hand, elevated milk protein prices and supply issues that some manufacturers are experiencing relative to this commodity. Soy proteins have been proposed to replace milk proteins, either partially or totally, depending on the system, and dairy-like products have been developed based entirely on soy protein.

In view of soy protein's documented health benefits it is desirable to incorporate substantial quantities of soy protein in beverages.

Soy protein-containing beverages typically have, in their crude form, often more or less off-flavours (taste, but in particular aroma or volatiles) which relate to the origin of the material, and in particular such is the case for soy protein from a less than ideal quality source. Typical examples of such disturbing aromas or volatiles are often described (by panels or trained flavourists) as "soy" or "cereal". For this reason, most soy drinks are heavily flavoured, e.g. by fruit flavours, vanilla flavours, or chocolate flavours, to mask such. Also, fruit juices and/or fruit pulps or concentrates are used for such, by blending them with soy protein-containing beverages, in which case one aims to overpower the soy or cereal aromas and flavours by fruit flavours. Alternative solutions to this which have also been proposed for improving the profile of aromas or volatiles is subjecting the soy material to fermentation with e.g. lactic acid bacteria, as is disclosed e.g. in WO 2009/065722, WO 2009/065723 and WO 2009/065724. Such may provide an adequate solution, but it will e.g. increase processing complexity and cost. For some purposes it can be desired to be able to provide a soy protein containing beverage which is not fermented, and still has an improved aroma / volatile profile, especially w.r.t. a reduced level of "soy" and/or "cereal" notes.

It is generally accepted that for an aqueous beverage containing soy protein (e.g. in an amount of protein similar to dairy-milk), that in order for an acceptable mouthfeel or texture, a thickening agent needs to be included. There are currently commercial soy-based beverages on the market in Europe, which comprise gellan for that purpose. Thickening agents like gellan or carrageenan are also employed in other drinks than soy protein containing beverages, e.g. to prevent sedimentation, e.g. in cocoacontaining beverages, or to improve the mouthfeel and/or texture, and another thickening agent also used for such is e.g. CMC (carboxymethyl cellulose). The amounts employed are usually small, so as to not unduly thicken the product.

WO 2009/065725 discloses a fermented beverage comprising soy protein and insoluble cellulosic fibres. The use of such cellulosic fibres in such beverages is reported to provide a very pleasant creamy mouthfeel and significantly improves emulsion stability, typically reflected by a reduced rate of syneresis.

WO 2005/074713 discloses products comprising insoluble citrus fibres. Said compositions are preferably not beverages.

WO 2007/003391 discloses compositions comprising citrus fibres and a hydrophobic vitamin like one of the vitamins A, D, E, or K, and it discloses a process to prepare such compositions.

US patent application US 2003/0059514 discloses compositions comprising soy protein, wherein the protein is present in particles having a mean particle size distribution of 0.1 to 10 microns. Furthermore, a process to obtain such composition is disclosed.

### Summary of the Invention

It is an object of the present invention to provide a ready-to-drink, packaged non-fermented, soy protein-containing beverage comprising 1-8% soy protein, which beverage is modified such that it has a reduced level of soy and/or cereal off-flavours or aromas, compared to a beverage not modified.
Preferably the beverage is suitable as a base product for preparing other soy protein containing products with, which means that the beverage preferably should have a pH of more than 5.5 and less than 8. This also means that the product should preferably be a non-fermented soy protein beverage, as such may limit the application as a neutral base product. Also, the beverage should have a viscosity or mouthfeel not too much different from conventional products (i.e. flavour or aroma improvements should not be at the expense of substantially modified viscosities or mouthfeel).

It has now been found that the above may be achieved, at least in part, by a ready-to-drink, packaged non-fermented soy-based beverage having a water content of at least 80 wt.%, a soy protein content of 1.0-8.0 wt.%, a fat content of 0 to 5 wt.%, said beverage further comprising from 0.01 to 0.4 wt.% of insoluble cellulosic citrus fibres, said beverage having a viscosity of below 0.5 Pas at a shear rate between 2 and 100 s⁻¹, when measured at 5°C.

Also, the above objectives may be achieved at least in part by a ready-to-drink, packaged soy-based beverage having a water content of at least 80 wt.%, a soy protein content of 1.0-8.0 wt.%, a fat content of 0 to 5 wt.%, said beverage further comprising from 0.01 to 0.4 wt.% of insoluble cellulosic citrus fibres, said soy-based beverage having a pH in the range of more than 5.5 and less than 8, and said beverage having a viscosity of below 0.5 Pas at a shear rate between 2 and 100 s⁻¹, when measured at 5°C.

### Detailed description of the invention

For the beverages according to the present invention, it was surprisingly found that insoluble cellulosic citrus fibres can improve flavour, in particular aroma in non-fermented soy-protein containing beverages and in soy-protein containing beverages having a pH in the range of more than 5.5 and less than 8. This is surprising as so far citrus fibres have been used to impart viscosity, or for structuring purposes in low-fat products like dressings. It was surprisingly found that some of the off-flavours (e.g. "soy" and "cereal") of soy protein-containing drinks could be reduced when compared to the same formulations using CMC, and that such products had a similar viscosity. This would make the product especially suitable for applications wherein a soy protein is used to prepare a ready-to-drink beverage, which soy protein is of a quality less than the highest quality, as such products would be expected to have a stronger off-flavour in terms of "soy" and "cereal" notes than very high quality soy protein. Hence, in the present invention it is preferred that the ready-to-drink, packaged non-fermented soy-based beverage having a water content of at least 80 wt.%, a soy protein content of 1.0-8.0 wt.%, a fat content of 0 to 5 wt.%, and which beverage further comprises from 0.01 to 0.4 wt.% of insoluble cellulosic citrus fibres, and which beverage has a viscosity of below 0.5 Pas at a shear rate between 2 and 100 s⁻¹, when measured at 5°C, has a pH in the range of more than 5.5 and less than 8.

Herein, "non-fermented" is to be understood as a composition which has not been fermented using bacteria, e.g. lactic acid bacteria. Hence, products such as soy yoghurts and soy yoghurt drinks, i.e. products fermented with yoghurt culture, which, according to the Codex Alimetarius, FAO/WHO 1977, include *Lactobacillus bulgaricus* and *Streptococcus thermophilus,* are excluded from this invention.

Following being non-fermented, the beverage of the invention preferably comprises no significant amount of lactic acid. Preferably, the beverage contains at less than 0.05 wt.% of lactic acid, more preferably less than 0.2 wt.% of lactic acid, most preferably less than 0.4 wt.% of lactic acid.

The soy-based beverage of the present invention preferably has not been fermented by lactic acid bacteria and/or *Bifidobacterium.*

Soy-based beverage herein means that the beverage comprises at least protein from soy origin, and optionally other ingredients from soy beans as well. "Soy protein", as used herein, refers to the total amount of soy protein and soy protein derived peptides contained in the beverage. The beverage may be based on soy protein, on soy protein hydrolysate or combinations thereof.

With beverage is meant herein a product which has (when measured at 20°C) a viscosity of below 0.5 Pas at a shear rate between 2 and 100 s⁻¹, when measured at 5°C. Preferably, the beverages according to the present invention have a viscosity of below 0.3 Pas at a shear rate between 2 and 100 s⁻¹, when measured at 5°C.

Viscosity for the beverages according to the present invention can suitably be measured with the help of a rheometer AR1000 (TA Instruments, the Netherlands), between shear rates of 0.1-1000s⁻¹ with a cone and plate geometry, using a cone having an angle of 2° and a gap set to 70µm, and at a temperature (controlled) of 5°C.

Cellulose is found in plants as microfibrils, which typically have a diameter of 2-20 nm and a length of 100-40,000 nm. These form the structurally strong framework in the cell walls of plant materials. Cellulose is a linear polymer of β-(1→4)-D-glucopyranose units. Cellulose molecules typically consist of between 2,000-14,000 of such units and are completely insoluble in normal aqueous solutions. When dispersed in an aqueous solution insoluble cellulosic fibres typically bind considerable amounts of water. Cellulosic fibres may contain other fibrous components such as hemicelluloses, pectins and lignin.

Purified cellulose is used as a starting material for the manufacture of a number of water-soluble hydrocolloids, such as carboxymethyl cellulose (CMC). The manufacture of these cellulose derivatives involves chemical modification of the natural cellulose material. CMC, for instance, is synthesized by the alkali-catalyzed reaction of cellulose with chloroacetic acid. The polar (organic acid) carboxyl groups render the cellulose soluble and chemically reactive. Typically, the cellulosic fibres of the present invention are substantially or completely underivatised. With respect to the insoluble cellulosic citrus fibres, it is preferred that such are essentially non-hydrolysed. According to a most preferred embodiment of the invention the insoluble cellulosic fibres are natural cellulosic fibres which have not been chemically modified.

Unlike, for instance, microcrystalline cellulose, the cellulose molecules within the present cellulosic fibres are essentially non-hydrolysed. Typically, the cellulose molecules contained within the insoluble cellulosic fibres employed in accordance with the present invention contain at least 1,000, preferably at least 2,000 β-(1→4)-D-glucopyranose units, and are preferably non-depolymerised.

The insoluble cellulosic fibres in the present invention are insoluble citrus fibres. Most preferably, the insoluble citrus fibres originate from the albedo and the flavedo of the citrus fruits. The insoluble cellulosic fibres employed in the beverages of the present invention preferably have a (volume mean diameter D4.3) particle size of above 10 µm (micrometer), when measured using a Malvern Mastersizer (using a refractive index of 1.45). Preferably, the cellulosic fibres herein have a particle size of size (volume mean diameter D4.3) of above 20 µm (micrometer). Preferably, the cellulosic fibres herein have a particle size of size (volume mean diameter D4.3) of below 200 µm (micrometer), more preferably below 150 µm (micrometer) and most preferably below 100 µm (micrometer). Smaller sizes would require additional process steps to break the bigger fibres down, which is a disadvantage.

Preferably, in the beverages according to this invention, the insoluble cellulosic fibres have a water binding capacity of 6-30 wt.%.

As to the amount employed, it should neither be too much, to avoid a thick product, nor too little for a good effect on mouthfeel and/or off flavour masking. Preferred herein is to use the insoluble cellulosic fibres in an amount of from 0.03 to 0.1 wt.% on the beverage.

A suitable cellulosic citrus fibre product for the present invention is Herbacel, obtainable from Herbstreith & Fox GmbH, Germany. Also, such products are described in WO 01/17376.

The invention is in particular suitable for non-dairy formulations (or at least low-dairy formulations), which is an advantage for people allergic to them, strict vegetarians, and others. Hence, it is preferred herein that the beverage contains less than 0.1% by weight of dairy protein, and preferably is substantially free of dairy protein. Likewise, the beverages according to the present invention preferably contain less than 0.1% by weight of lactose, preferably is substantially free of lactose. This is an advantage as some people are lactose intolerant.

Now soy and cereal off-tastes are suitably managed by the presence of certain fibres, there is less or no need anymore for the presence of heavy fruit flavours, or even the use of fruit juices, concentrates or purees and the likes to mask such off-flavours. This makes the beverages in the present invention suitable as a neutral base product. Following this, it is preferred that the beverages according to the present invention comprises less than 2%, more preferably less than 1%, most preferably less than 0.7% of fruit or fruit-derived ingredients, based on dry weight of fruit or fruit ingredients on the final beverage. Clearly, as the cellulosic fibres are of fruit origin, and their presence is required, presence of some fruit-derived ingredients are allowed, but preferably no other than the insoluble cellulosic citrus fibres herein defined.

The beverage according to the present invention are preferably substantially free of fat-soluble vitamins.

In order to be suitable as a neutral base for e.g. further products (beverages), it is preferred that the pH of the beverage is above 5.5 and below 8, preferably the pH is above 6 and below 8, more preferably above 6 and below 7.5.

The beverage according to the present invention is preferably substantially free from carboxy methyl cellulose, e.g. for processing reasons as set out hereinbefore. The present invention enables the manufacture of soy-based beverages without using high levels of pectins, notably low methoxy pectin and/or high methoxy pectin. Consequently, in a preferred embodiment, the beverage contains less than 1% wt.%, preferably less than 0.75 wt%, most preferably less than 0.5 wt% of a high methoxy pectin.

The beverages of the invention preferably have a water content of at least 85 wt%, most preferably at least 87 wt%, based on the total weight of the beverage.

The invention further relates to processes by which the products herein disclosed can be prepared. Hence, the invention further relates to a process for providing a ready to drink, packaged non-fermented soy-based beverage having a water content of at least 80 wt.%, a soy protein content of 1.0-8.0 wt.%, a fat content of 0 to 5 wt.%, said beverage further comprising from 0.01 to 0.4 wt.% of insoluble cellulosic citrus fibres, said beverage having a viscosity of below 0.5 Pas at a shear rate between 2 and 100s⁻¹, which process comprises the steps of:
(a) providing a mixture comprising 1.0-8.0% soy protein, 0.01-0.4% wt of insoluble cellulosic fibres and at least 80% wt of water
(b) subjecting said mixture to a heat-preservation step involving pasteurisation or sterilisation
(c) packaging the product in containers of maximum 1.5 liter
whereby steps (b) and (c) may occur in any given order or simultaneously.

Preferably, in the above process, said soy-based beverage has a pH in the range of more than 5.5 and less than 8.

The invention thus further relates to a process for providing a ready to drink, packaged soy-based beverage having a water content of at least 80 wt.%, a soy protein content of 1.0-8.0 wt.%, a fat content of 0 to 5 wt.%, said beverage further comprising from 0.01 to 0.4 wt.% of insoluble cellulosic citrus fibres, said soy-based beverage having a pH in the range of more than 5.5 and less than 8, said beverage having a viscosity of below 0.5 Pas at a shear rate between 2 and 100s⁻¹, which process comprises the steps of:
(a) providing a mixture comprising 1.0-8.0% soy protein, 0.01-0.4% wt of insoluble cellulosic fibres and at least 80% wt of water
(b) subjecting said mixture to a heat-preservation step involving pasteurisation or sterilisation
(c) packaging the product in containers of maximum 1.5 liter
whereby steps (b) and (c) may occur in any given order or simultaneously.

To the above two processes, the same preferred embodiments for e.g. the cellulosic citrus fibres, the amount of soy protein, the presence or absence of other components apply as to the compositions as set out above.

### Examples

A model soy-protein containing beverage (level of soy protein about 5% by weight based on the beverage) was prepared with the ingredients as in table 1 below: one using CMC as a thickener, one using citrusfibres as a thickener.

**Table 1**

| Ingredients | Sample 1a | Sample 1b |
|---|---|---|
| | | |
| Sunopta Soy Bean powder SSFR (containing about 45% by weight of soy protein) | 11% | 11% |
| Sucrose | 6% | 6% |
| Calcium lactate | 0.1% | 0.1% |
| CMC (100 PA from Wolf Cellulosics) | - | 0.05% |
| Citrus fibres (AQ + Type N from Herbapec) | 0.05% | - |
| Salt | 0.2% | 0.2% |
| Water | balance | balance |

The CMC-containing beverages were prepared using the following processing. The soy protein powder was dispersed in hot water (approx. 80°C). The soy was added slowly under vigorous stirring using Ultra Turrax and left to hydrate for approximately 15 minutes. The calcium lactate and the salt were added to this slurry. The CMC slurry was prepared by the addition of dry blended CMC and sugar. This was added slowly to hot water (80°C) under vigorous stirring with Ultra Turrax. Care was taken that all CMC was in solution and the slurry was left for approximately 20 minutes to hydrate. Finally, the CMC and the soy slurries were mixed to yield final concentrations of ingredients according to Table 1. The solution was pasteurised at 78°C for 43 seconds and homogenised at 180 bars.

The citrus fibre-containing beverages were prepared by dispersing the soy powder in hot water (80°C). The soy was added slowly under vigorous stirring using Ultra Turrax and left to hydrate for approximately 15 minutes. The calcium lactate, sugar and salt were added to this slurry. The citrus fiber (CF) slurry was prepared addition of CF to hot water (80°C). The slurry was mixed using UltraTurrax and left to swell for approx 20 minutes. Finally, the CF and the soy slurries were mixed to yield final concentrations of ingredients according to Table 1. The solution was pasteurised at 78°C for 43 seconds and homogenised at 180 bars.

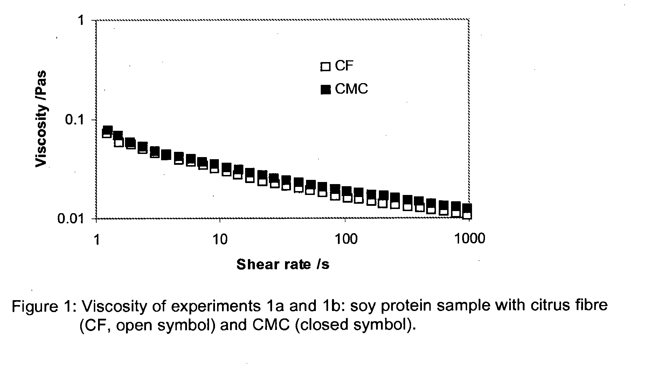

The samples were subjected to viscosity measurements and to a panel test for evaluating the flavour. Viscosity was measured using a rheometer AR1000 (TA Instruments, the Netherlands), between shear rates of 0.1-1000s⁻¹ with a cone and plate geometry. The cone had an angle of 2° and the gap was set to 70µm. The temperature was controlled by a Peltier system and set to 5°C. The results are set out in figure 1. In figure 1: sample with 0.05% added citrus fibre (CF, open symbol) and 0.05% added CMC (closed symbol).

The panel test for evaluating the flavour was conducted along the following lines. The panel consisted of 14 trained panelists which were asked the question whether any difference (R-index test) was found between sample 1 a and 1 b after which a qualitative discussion was held. The panel found a difference between sample 1a and 1 b with an R index of 63.1. The results from the qualitative discussion is summarized in Table 2.

**Table 2**

| Attribute | Sample 1a | Sample 1b |
|---|---|---|
| Thick | 3.1 | 4.5 |
| Full / Creamy | 3.1 | 5.3 |
| Slimey | 2 | 3.8 |
| Soy | 4.5 | 5.2 |
| Cereal | 2.8 | 3.5 |
| Sweet | 7.8 | 6.9 |
| Dry | 5.1 | 6.5 |

No ANOVA was done on the results due to the qualititative approach, nevertheless, the results indicate that the CF containing sample (1a) is perceived as less slimey and thick then the CMC containing sample (1 b) despite the viscosity being similar (Figure 1). Furthermore, the CF containing sample is perceived as having less soy and cereal off notes compared to the CMC sample.

The viscosity data show that a beverage containing 5% soy protein can be prepared that has a slightly increased viscosity, and that citrus fibres can achieve a similar viscosity and viscosity profile as CMC.

The panel test shows that "soy" and "cereal" notes are reduced for the beverage of table 1 containing citrus fibres, as compared to that containing CMC. Hence, surprisingly, at such soy protein levels citrus fibres are capable of masking or suppressing soy and cereal off notes (better than CMC can).

## Claims

1. A ready to drink, packaged non-fermented soy-based beverage having a water content of at least 80 wt.%, a soy protein content of 1.0-8.0 wt.%, a fat content of 0 to 5 wt.%, said beverage further comprising from 0.01 to 0.4 wt.% of insoluble cellulosic citrus fibres, said beverage having a viscosity of below 0.5 Pas at a shear rate between 2 and 100s⁻¹.

2. A beverage according to claim 1, wherein said packaged non-fermented soy-based beverage has a pH in the range of more than 5.5 and less than 8.

3. A beverage according to any of the preceding claims, wherein said beverage has a viscosity of below 0.3 Pas at a shear rate between 2 and 100 s⁻¹.

4. A beverage according to any of the preceeding claims, wherein the cellulosic citrus fibres are essentially non-hydrolysed.

5. A beverage according to any of the preceeding claims, wherein the cellulosic citrus fibres are substantially underivatised.

6. A beverage according to any one of the preceding claims, wherein the cellulose molecules contained within the insoluble cellulosic citrus fibres contain at least at least 1,000, preferably at least 2,000 β-(1→4)-D-glucopyranose units.

7. A beverage according to any of the preceding claims, wherein the cellulosic citrus fibres have a particle size (volume mean diameter D4.3) of above 10 micrometer, and preferably between of between 10 and 200 micrometer.

8. A beverage according to any of the preceeding claims, wherein the amount of insoluble cellulosic fibres is from 0.03 to 0.1 wt.%.

9. A beverage according to any of the preceeding claims, wherein the beverage contains less than 0.1 % by weight of dairy protein, preferably is substantially free of dairy protein.

10. A beverage according to any of the preceeding claims, wherein it contains less than 2%, preferably less than 1%, more preferably less than 0.7% of fruit or fruit-derived ingredients, based on dry weight of fruit or fruit ingredients on the final beverage.

11. A beverage according to any of the preceeding claims, wherein the beverage contains less than 0.1% by weight of lactose, preferably is substantially free of lactose.

12. A beverage according to any of the preceeding claims, wherein the pH of the beverage is above 5.5 and below 8, preferably the pH is above 6 and below 7.5.

13. A beverage according to any of the preceeding claims, wherein it is substantially free from carboxy methyl cellulose.

14. A process for providing a ready to drink, packaged non-fermented soy-based beverage having a water content of at least 80 wt.%, a soy protein content of 1.0-8.0 wt.%, a fat content of 0 to 5 wt.%, said beverage further comprising from 0.01 to 0.4 wt.% of insoluble cellulosic citrus fibres, said beverage having a viscosity of below 0.5 Pas at a shear rate between 2 and 100s⁻¹, which process comprises the steps of:
a. providing a mixture comprising 1.0-8.0% soy protein, 0.01-0.4% wt of insoluble cellulosic fibres and at least 80% wt of water
b. subjecting said mixture to a heat-preservation step involving pasteurisation or sterilisation
c. packaging the product in containers of maximum 1.5 liter
whereby steps (b) and (c) may occur in any given order or simultaneously.

15. A process according to claim 14, wherein said soy-based beverage has a pH in the range of more than 5.5 and less than 8.

## Patentansprüche

1. Trinkfertiges, abgepacktes nicht-fermentiertes Getränk auf Sojabasis, das einen Wassergehalt von wenigstens 80 Gew.-%, einen Sojaproteingehalt von 1,0 bis 8,0 Gew.-%, einen Fettgehalt von 0 bis 5 Gew.-% hat, wobei das Getränk außerdem 0,01 bis 0,4 Gew.-% unlösliche Cellulose-Citrusfasern umfasst, wobei das Getränk eine Viskosität von unter 0,5 Pas bei einer Scherrate von zwischen 2 und 100 s⁻¹ hat.

2. Getränk gemäß Anspruch 1, wobei das abgepackte nicht-fermentierte Getränk auf Sojabasis einen pH im Bereich von mehr als 5,5 und weniger als 8 hat.

3. Getränk gemäß einem der vorangehenden Ansprüche, wobei das Getränk eine Viskosität von unter 0,3 Pas bei einer Scherrate von zwischen 2 und 100 s⁻¹ hat.

4. Getränk gemäß einem der vorangehenden Ansprüche, wobei die Cellulose-Citrusfasern im Wesentlichen nicht hydrolysiert sind.

5. Getränk gemäß einem der vorangehenden Ansprüche, wobei die Cellulose-Citrusfasern im Wesentlichen underivatisiert sind.

6. Getränk gemäß einem der vorangehenden Ansprüche, wobei die Cellulosemoleküle, die in den unlöslichen Cellulose-Citrusfasern enthalten sind, wenigstens 1000, vorzugsweise wenigstens 2000 β-(1→4)-D-Glucopyranose-Einheiten enthalten.

7. Getränk gemäß einem der vorangehenden Ansprüche, wobei die Cellulose-Citrusfasern eine Partikelgröße (volumenmittlerer Durchmesser D4.3) von über 10 Mikrometer und vorzugsweise von zwischen 10 und 200 Mikrometer haben.

8. Getränk gemäß einem der vorangehenden Ansprüche, wobei die Menge an unlöslichen Cellulosefasern 0,03 bis 0,1 Gew.-% ist.

9. Getränk gemäß einem der vorangehenden Ansprüche, wobei das Getränk weniger als 0,1 Gew.-% Milchprotein enthält, vorzugsweise im Wesentlichen frei von Milchprotein ist.

10. Getränk gemäß einem der vorangehenden Ansprüche, wobei es weniger als 2 %, vorzugsweise weniger als 1 %, bevorzugter weniger als 0,7 % Frucht oder von Frucht stammende Ingredienzien, bezogen auf das Trockengewicht von Frucht oder Frucht-Ingredienzien, auf der Basis des fertigen Getränks, enthält.

11. Getränk gemäß einem der vorangehenden Ansprüche, wobei das Getränk weniger als 0,1 Gew.-% Lactose enthält, vorzugsweise im Wesentlichen frei von Lactose ist.

12. Getränk gemäß einem der vorangehenden Ansprüche, wobei der pH des Getränks über 5,5 und unter 8 ist, der pH vorzugsweise über 6 und unter 7,5 ist.

13. Getränk gemäß einem der vorangehenden Ansprüche, wobei es im Wesentlichen frei von Carboxymethylcellulose ist.

14. Verfahren zur Bereitstellung eines trinkfertigen, abgepackten nicht-fermentierten Getränks auf Sojabasis, das einen Wassergehalt von wenigstens 80 Gew.-%, einen Sojaproteingehalt von 1,0 bis 8,0 Gew.-%, einen Fettgehalt von 0 bis 5 Gew.-% hat, wobei das Getränk außerdem 0,01 bis 0,4 Gew.-% unlösliche Cellulose-Citrusfasern umfasst, wobei das Getränk eine Viskosität von unter 0,5 Pas bei einer Scherrate von zwischen 2 und 100 s⁻¹ hat, wobei das Verfahren die Schritte:
a. Bereitstellen eines Gemisches, umfassend 1,0 bis 8,0 % Sojaprotein, 0,01 bis 0,4 Gew.-% unlösliche Cellulosefasern und wenigstens 80 Gew.-% Wasser,
b. Unterwerfen des Gemisches einem Hitzekonservierungsschritt, der Pasteurisierung oder Sterilisierung involviert,
c. Abpacken des Produkts in Behälter mit maximal 1,5 Liter umfasst,
wobei Schritte (b) und (c) in einer beliebigen Reihenfolge oder gleichzeitig erfolgen können.

15. Verfahren gemäß Anspruch 14, wobei das Getränk auf Sojabasis einen pH im Bereich von mehr als 5,5 und weniger als 8 hat.

## Revendications

1. Boisson, à base de soja, non fermentée, prête à boire, conditionnée, ayant une teneur en eau d'au moins 80 % en poids, une teneur en protéine de soja de 1,0 à 8,0 % en poids, une teneur en matières grasses de 0 à 5 % en poids, ladite boisson comprenant en outre de 0,01 à 0,4 % en poids de fibres cellulosiques insolubles d'agrumes, ladite boisson ayant une viscosité inférieure à 0,5 Pas à un taux de cisaillement entre 2 et 100 s⁻¹.

2. Boisson selon la revendication 1, dans laquelle ladite boisson à base de soja non fermentée, conditionnée, a un pH dans la plage supérieure à 5,5 et inférieure à 8.

3. Boisson selon l'une quelconque des revendications précédentes, ladite boisson ayant une viscosité inférieure à 0,3 Pas à un taux de cisaillement entre 2 et 100 s⁻¹.

4. Boisson selon l'une quelconque des revendications précédentes, dans laquelle les fibres cellulosiques d'agrume sont essentiellement non hydrolysées.

5. Boisson selon l'une quelconque des revendications précédentes, dans laquelle les fibres cellulosiques d'agrume sont substantiellement non dérivatisées.

6. Boisson selon l'une quelconque des revendications précédentes, dans laquelle les molécules de cellulose contenues dans les fibres cellulosiques insolubles d'agrume contiennent au moins 1000, de préférence au moins 2000 motifs de β-(1→4)-D-glucopyranose.

7. Boisson selon l'une quelconque des revendications précédentes, dans laquelle les fibres cellulosiques d'agrume ont une taille de particules (diamètre volumique moyen D4.3) supérieure à 10 microns et de préférence, entre 10 et 200 microns.

8. Boisson selon l'une quelconque des revendications précédentes, dans laquelle la quantité de fibres cellulosiques insolubles est de 0,03 à 0,1 % en poids.

9. Boisson selon l'une quelconque des revendications précédentes, la boisson contenant moins de 0,1 % en poids de protéine laitière, de préférence étant substantiellement dépourvue de protéine laitière.

10. Boisson selon l'une quelconque des revendications précédentes, qui contient moins de 2 %, de préférence, moins de 1 %, de manière davantage préférée, moins de 0,7 % de fruit ou d'ingrédients dérivés de fruits, sur la base du poids sec du fruit ou des ingrédients de fruits de la boisson finale.

11. Boisson selon l'une quelconque des revendications précédentes, la boisson contenant moins de 0,1 % en poids de lactose, de préférence, étant substantiellement dépourvue de lactose.

12. Boisson selon l'une quelconque des revendications précédentes, dans laquelle le pH de la boisson est supérieur à 5,5 et inférieur à 8, de préférence, le pH est supérieur à 6 et inférieur à 7,5.

13. Boisson selon l'une quelconque des revendications précédentes, qui est substantiellement dépourvue de carboxyméthylcellulose.

14. Procédé pour fournir une boisson à base de soja, non fermentée, prête à boire, conditionnée, ayant une teneur en eau d'au moins 80 % en poids, une teneur en protéine de soja de 1,0 à 8,0 % en poids, une teneur en matières grasses de 0 à 5 % en poids, ladite boisson comprenant en outre de 0,01 à 0,4 % en poids de fibres cellulosiques insolubles d'agrumes, ladite boisson ayant une viscosité inférieure à 0,5 Pas à un taux de cisaillement entre 2 et 100 s⁻¹, ledit procédé comprenant les étapes consistant à :
a. fournir un mélange comprenant 1,0 à 8,0 % de protéine de soja, 0,01 à 0,4 % en poids de fibres cellulosiques insolubles et au moins 80 % en poids d'eau,
b. soumettre ledit mélange à une étape de conservation thermique comprenant la pasteurisation ou la stérilisation,
c. conditionner le produit dans des contenants de 1,5 litre au maximum, les étapes (b) et (c) pouvant être réalisées selon un ordre quelconque ou simultanément.

15. Procédé selon la revendication 14, dans lequel ladite boisson à base de soja a un pH dans la plage supérieure à 5,5 et inférieure à 8.
